# FASCICULE DE BREVET EUROPEEN

(11) **EP 2 620 365 B1**
(45) Date de publication et mention de la délivrance du brevet: **24.06.2015**
(21) Numéro de dépôt: 12007161.8
(22) Date de dépôt: 16.10.2012
(51) Int. Cl.: B64D 11/06

(54) **Dispositif d'alimentation électrique d'équipements intégrés au plancher d'une cabine d'aéronef**
Vorrichtung zur Stromversorgung von in den Boden einer Luftfahrzeugkabine integrierten Geräten
Device for supplying electric power to equipment built into the floor of an aircraft cabin

(30) Priorité: 31.10.2011 FR 1103310
(43) Date de publication de la demande: 31.07.2013
(73) Titulaire: Airbus Helicopters, 13725 Marignane Cedex (FR)
(72) Inventeur: Imbert, Nicolas, F-13008 Marseille (FR); Chuc, Charles, F-13012 Marseille (FR)
(74) Mandataire: GPI & Associés

(56) Documents cités:
- US-A- 4 763 360
- US-A1- 2005 258 676
- US-A1- 2006 038 070
- US-A1- 2006 097 109

## Description

La présente invention est du domaine des équipements électriques de véhicules, tels que des aéronefs. La présente invention concerne un dispositif d'alimentation électrique d'équipements, tels que des sièges fixés dans ce véhicule, ainsi qu'un aéronef comportant un tel dispositif.

Il est de plus en plus fréquent que soient implémentées sur les sièges de véhicules des fonctions électriques de différents types, telle une fonction sécurité par le biais de coussins gonflables couramment dénommés en langue anglaise « airbag » par exemple, une fonction confort remplie par exemple à l'aide de moyens chauffants, une fonction d'information pour par exemple détecter la présence de passagers.

Dans le cas particulier des aéronefs, des reconfigurations de la cabine sont fréquentes, nécessitant alors le déplacement, la réorientation, l'ajout ou la suppression de un ou plusieurs équipements, ainsi que les différents éléments auxquels ils peuvent être reliés ou associés.

Des sièges équipés par exemple d'airbag sont aujourd'hui utilisés, notamment dans les aéronefs à voilure tournante, mais sont d'une manière générale autonomes électriquement, en embarquant une batterie permettant d'alimenter électriquement l'airbag et un calculateur électronique commandant le déploiement de l'airbag. Dans ce cas, la masse ajoutée au siège peut-être conséquente, rendant ainsi son déplacement pénible.

De plus, du fait de cette autonomie électrique et électronique, les risques de déploiement intempestif de l'airbag sont importants lors de toute manipulation du siège et nécessitent donc de prendre des précautions supplémentaires.

Enfin, les fonctions électriques et électroniques intégrées au siège, tel que l'airbag, sont parfois critiques, nécessitant des systèmes électroniques complexes et sensibles à toute perturbation extérieure, et bien souvent à durée de vie limitée. Les coûts d'entretien et de maintenance associés peuvent donc être importants.

A la vue des risques et contraintes précédemment cités, il est fréquent aujourd'hui de ne pas intégrer de telles fonctions électriques aux sièges d'aéronef.

Il est par contre d'usage courant d'utiliser de nombreuses fonctions électriques et électroniques dans les véhicules automobiles, et particulièrement dans les sièges avant de ces véhicules. Dans ce cas, le positionnement des sièges est unique et définitif et l'alimentation électrique est généralement réalisée par un faisceau électrique sortant du plancher et équipé d'un connecteur. Ce faisceau est relié manuellement au connecteur correspondant sur le siège en usine lors de l'assemblage du véhicule et aucune contrainte particulière n'est donc attachée à l'intégration du faisceau et du connecteur dans le plancher du véhicule, si ce n'est de respecter les différents déplacements possibles du siège. Ainsi durant la vie du véhicule, il n'y aura aucun déplacement ou démontage de ces sièges (sauf cas exceptionnel de réparation en garage), ces zones n'étant pas configurables.

Certains véhicules automobiles, type monospace, comportent une zone arrière où les sièges peuvent facilement être démontés, déplacés et positionnés dans différentes configurations. Mais dans ce cas, ils n'ont aucune fonction électrique de puissance ou d'information, leur modularité étant incompatible avec la présence d'un faisceau électrique sur le plancher.

Il est également connu, pour des liaisons électriques présentes dans les véhicules de tout type, d'utiliser classiquement des connexions de type contacts mâle/femelle, l'une coopérant avec l'autre. Si le fonctionnement de ces liaisons, dans un environnement propre, est fiable, il est très sensible aux pollutions environnementales (poussières, boue...) qui peuvent perturber la liaison électrique, provoquer des courts-circuits et des dégradations mécaniques suivant la nature des objets s'introduisant aux niveaux des contacts.

Les documents US 2007/0164156 et US 2005/0211835 présentent un système de rail d'alimentation électrique cheminant, sur la longueur totale de la cabine d'un avion, afin d'alimenter électriquement les sièges des passagers installés dans cette cabine. Ce rail d'alimentation comporte une ou plusieurs lignes conductrices sur l'ensemble de sa longueur, qui peuvent être connectées à des sources de puissance électrique et de données. Ce rail est positionné au-dessus du plancher à proximité du rail de fixation des sièges et est ouvert sur un de ces côté, sur l'ensemble de sa longueur. Un connecteur relié électriquement à chaque siège ou rangée de sièges peut alors être connecté, à travers cette ouverture, et en tout point de la cabine de l'avion, à ce rail d'alimentation afin d'établir la liaison électrique entre les sièges et les différentes sources de puissance et de données. Les lignes conductrices à l'intérieur du rail sont protégées de l'environnement extérieur, notamment par des lèvres en matériau souple côté ouvert du rail, ce qui assure une étanchéité tout en permettant l'introduction des connecteurs reliés aux sièges. Une fois l'ensemble des sièges positionnés et connectés au rail d'alimentation, des zones du rail d'alimentation, notamment à proximité des soubassements des sièges, restent accessibles. Les soubassements, également dénommés piétements, constituant la partie basse des équipements, permettent de fixer l'équipement sur le plancher. La couverture des rails de fixation des sièges doit alors être réaménagée afin de s'adapter aux positions des sièges et couvrir la zone à proximité des soubassements de sièges et des connecteurs branchés au rail d'alimentation, empêchant ainsi l'accès à ce rail d'alimentation.

On connait également le document US 2006/0038070, qui montre toutes les caractéristiques du préambule de la revendication 1, décrit un système et un procédé de câblage pour fournir une puissance électrique et/ou des données de communication dans une cabine d'un véhicule et plus particulièrement à des sièges installés dans cette cabine. Une pluralité de connecteurs inférieurs sont fixés dans des panneaux du plancher de la cabine et reliés à un faisceau électrique du véhicule. Des connecteurs supérieurs, reliés par exemple à l'unité électronique des sièges, peuvent être connectés aux connecteurs inférieurs afin de relier électriquement ces sièges au faisceau électrique du véhicule.

De plus, le document US 2006/0097109 décrit un dispositif de capot couvrant les rails de fixation des sièges entre les rangées de sièges installées dans la cabine d'un véhicule, un avion par exemple. Ce dispositif de capot est ajustable afin de s'adapter à l'espace disponible entre les rangées de sièges. Ce dispositif comprend également un faisceau électrique et des connecteurs afin de relier électriquement chaque siège au véhicule.

On connait le document US 4763360 qui décrit un système d'électrification de sièges de véhicule utilisant les rails de fixation de ces sièges. En effet, un rail de fixation comprend une ou deux bandes conductrices fixées le long du rail et séparées du rail par un isolant. Lors de la fixation du siège, un dispositif intégré au siège permet de réaliser une liaison électrique entre le siège et ces bandes conductrices permettant ainsi la transmission d'une puissance électrique et/ou de données.

Enfin, le document US 2005/0258676 décrit un système et un procédé de distribution de signaux électriques de puissance et/ou de données à des équipements d'une cabine d'un véhicule et plus particulièrement à des sièges installés dans cette cabine. Un rail d'alimentation électrique chemine sous le plancher de la cabine et un siège peut être relié à ce rail d'alimentation électrique en tout point de la cabine du véhicule, par l'intermédiaire d'un connecteur.

Il est à noter que l'arrière plan technologique contient le document EP 1-137-109 qui présente une prise de courant pour avion équipée d'un dispositif de sécurité empêchant tout branchement, sans la présence d'une plaque positionnée préalablement sur la prise femelle qui permet alors le déverrouillage du système de sécurité à l'introduction de la prise mâle.

On comprend que l'augmentation des fonctions électriques de différents types, intégrées dans les équipements de véhicules, et notamment dans les sièges, ne sont pas forcément compatibles avec la modularité dont doivent faire preuve aujourd'hui les cabines de ces véhicules.

En effet, la reconfiguration des cabines d'aéronef est en général soumise à des contraintes de temps afin de limiter l'immobilisation du véhicule au minimum. Il est donc difficilement envisageable, dans le cas de reconfiguration d'une cabine équipée d'équipements comportant des fonctions électriques, d'avoir à modifier l'implantation de l'ensemble des faisceaux électriques d'alimentation de ces équipements.

De plus, la surface supérieure du plancher de la cabine, en regard de l'équipement, doit éviter de gêner, aussi bien le chargement de charges que le déplacement de personnes. Il convient également d'éviter d'avoir des éléments électriques risquant d'être dégradés par le passage de personnes ou de charges.

Enfin, l'environnement extérieur parfois agressif dans lequel peuvent évoluer ces véhicules est une contrainte supplémentaire à prendre en compte, notamment en présence de fonctions électriques.

La présente invention a alors pour objet de proposer un dispositif d'alimentation électrique d'équipement permettant de s'affranchir des limitations mentionnées ci-dessus, en permettant de reconfigurer de façon rapide les équipements d'une cabine de véhicule comportant des fonctions électriques, tout en restant compatible avec les divers environnements extérieurs auxquels peut être confronté le véhicule.

L'invention vise un dispositif d'alimentation électrique d'un équipement d'un véhicule, tel qu'un siège d'aéronef, comprenant un faisceau électrique, dénommé « harnais » par commodité, pourvu d'au moins un conducteur électrique, et un connecteur, dénommé « embase » par commodité, muni d'au moins un contact électrique.

Chaque conducteur du harnais peut être relié électriquement d'une part aux contacts de l'embase et d'autre part aux sources de puissance électrique et d'information du véhicule, correspondant aux différentes fonctions intégrées aux équipements, éventuellement par l'intermédiaire d'un calculateur électronique centralisant l'ensemble de ces sources.

L'équipement du véhicule comprend un connecteur, dénommé « fiche » par commodité, incluant au moins une broche électrique, la fiche étant liée à un faisceau électrique solidaire de l'équipement du véhicule. Chaque broche de la fiche peut être reliée électriquement à au moins un conducteur du faisceau électrique de l'équipement, chaque conducteur du faisceau pouvant lui-même être relié aux différentes fonctions intégrées à l'équipement, éventuellement par l'intermédiaire d'un calculateur électronique centralisant l'ensemble de ces fonctions.

L'embase coopère avec la fiche afin que chaque contact de l'embase établisse une liaison électrique avec une broche de la fiche et pour ainsi relier électriquement les sources de puissance et d'information du véhicule avec les différentes fonctions électriques de l'équipement.

Ce dispositif est remarquable en ce que le harnais est apte à cheminer sous la surface supérieure d'un plancher du véhicule, en regard de l'équipement, l'embase étant apte à être noyée dans l'épaisseur du plancher du véhicule. De ce fait, la surface supérieure du plancher ne présente aucune partie saillante.

L'embase est positionnée, dans le plancher de l'aéronef, à des endroits qui correspondent aux positions potentielles des équipements suivant l'ensemble des configurations possibles. En effet, le véhicule doit répondre à différentes réglementations pour chaque configuration de cabine, particulièrement pour chaque position de sièges. Ces positions, même si elles peuvent être nombreuses, ne sont donc pas illimitées, mais au contraire strictement définies et connues.

Ces positions correspondent donc à l'ensemble des certifications passées pour ce véhicule. Il n'est d'ailleurs pas rare de trouver dans certaines zones de véhicules des rails d'une longueur d'environ 20cm, limités donc à l'emplacement strict d'un seul siège. Il est alors possible de positionner sur le plancher de la cabine du véhicule une interface électrique pour chaque position potentielle de sièges suivant l'ensemble des configurations certifiées.

De la sorte, le dispositif prévoit de cheminer le harnais dans le plancher et de noyer l'embase dans le plancher. Il en résulte que la surface supérieure du plancher du véhicule, en regard des équipements, ne présente aucune partie saillante, notamment dans les zones où aucun équipement n'est installé. Le dispositif supprime ainsi le risque de détérioration de ces interfaces électriques par un élément extérieur ou la gêne que pourrait occasionner une interface implantée sur le plancher et dépassante de la surface supérieure du plancher.

De plus, le dispositif selon l'invention comporte un capot de protection mobile assurant l'ouverture et la fermeture de l'embase afin de rendre accessible l'embase pour la connexion de la fiche d'un l'équipement et de fermer l'embase lorsqu'aucun équipement ne doit lui être connecté. Le dispositif comporte également un moyen d'ouverture permettant, lors du montage de l'équipement sur le plancher, de piloter l'ouverture du capot de protection mobile.

L'embase est ainsi isolée de l'environnement extérieur et protégée de l'intrusion d'objets, notamment au niveau des contacts électriques, pouvant provoquer une dégradation ou un court-circuit. L'embase est également protégée des chocs éventuellement provoqués par les personnes se déplaçant sur le plancher ou les charges transportées.

Enfin, le moyen d'ouverture du capot de protection mobile commande l'ouverture du capot de protection quand, après avoir introduit un soubassement de l'équipement dans le rail du plancher du véhicule, le soubassement arrive contre les butées correspondant à sa position. L'embase est ainsi disponible pour la connexion de la fiche reliée électriquement à l'équipement.

On comprend alors que, grâce au dispositif de l'invention, la cabine d'un véhicule peut être reconfigurée rapidement, selon les différentes positions et orientations possibles des équipements, en restant compatible avec les différentes fonctions électriques de ces équipements, et sans qu'il soit nécessaire de modifier les câblages présents dans la cabine, tout en garantissant, dans les zones sans équipement, un plancher sans partie saillante et gênante pour tout déplacement ou chargement.

Le dispositif peut de plus comporter une ou plusieurs caractéristiques supplémentaires.

Par exemple, le capot de protection mobile de l'embase, dans sa position fermée, peut être affleurant à la surface supérieure du plancher du véhicule, permettant ainsi d'avoir un plancher sans aucune aspérité, c'est-à-dire qu'il ne comporte aucune zone en bosse, ou en creux.

Selon une alternative de l'invention, le capot de protection mobile est solidaire de l'embase et un joint en matériau souple est placé entre le capot de protection mobile et l'embase. Le joint, en silicone par exemple, peut être intégré à l'embase et l'étanchéité est assurée par le capot de protection mobile, qui vient en contact avec le joint lorsqu'il est fermé sur l'embase, afin d'isoler l'embase et les contacts électriques qu'elle contient des éléments extérieurs.

En effet, l'environnement extérieur peut être agressif (sable, eau de mer, boue...), notamment pour les composants électriques, de même que les différentes charges transportées ou leur contenu. L'embase et les contacts électriques qu'elle contient sont positionnés dans le plancher et en conséquence très exposés à l'environnement extérieur.

De ce fait, le risque de dégradation de l'embase ou des contacts électriques qu'elle contient est important si l'embase n'est pas suffisamment protégée pour résister à ces éléments, c'est-à-dire si l'embase ne dispose pas d'un système d'étanchéité suffisant.

De plus, le capot de protection mobile étant solidaire de l'embase, l'étanchéité est totalement indépendante des déformations du plancher, des différents éléments du plancher et des dispersions dans le positionnement de l'embase, par rapport au plancher notamment.

Dans une variante de l'invention, le joint peut être solidaire du capot de protection mobile, un autre joint étant alors intégré à la fiche afin d'assurer également l'étanchéité du dispositif lorsque la fiche est connectée à l'embase.

Selon un mode de réalisation préférée de l'invention, le moyen d'ouverture comprend deux doigts reliés au capot de protection mobile pour autoriser l'ouverture du capot de protection mobile. Les deux doigts sont, par exemple, placés de part et d'autre de l'embase et commandent l'ouverture du capot de protection mobile lors du montage d'un équipement dans le rail du plancher.

Cette redondance permet d'éviter une ouverture accidentelle ou intempestive du capot de protection mobile lors d'une action humaine ou de l'introduction d'objets dans le rail et les risques associés à cette ouverture. En effet, en l'absence de cette redondance, une ouverture accidentelle du capot de protection mobile par l'appui d'un élément extérieur sur le seul doigt utilisé est possible. L'accès à l'embase et aux contacts électriques qu'elle contient serait alors libre, avec les risques importants de dégradation de ces contacts par des éléments extérieurs ou d'électrocution de personnes.

Du fait de l'utilisation de deux doigts, une interface spécifique est nécessaire pour commander l'ouverture du capot de protection mobile, commandant simultanément le pilotage des deux doigts. L'interface spécifique peut être un outil adapté pour les opérations de maintenance par exemple ou le soubassement de l'équipement lors du montage des équipements dans le rail.

Par exemple, au moins un doigt du moyen d'ouverture comprend une pente inclinée, placée à une première extrémité du doigt et qui, dans une première position, est débouchante dans le rail. Lors du montage de l'équipement, le soubassement de l'équipement se translate dans le rail vers une butée de position et, coopérant avec la pente inclinée, génère une translation du doigt. Un moyen élastique placé à une seconde extrémité du doigt assure le retour du doigt dans la première position lors du démontage de l'équipement

Ainsi, un doigt faisant partie du moyen d'ouverture du capot de protection mobile est translaté automatiquement lors du montage de l'équipement, sans intervention manuelle directe sur le dispositif. Le moyen d'ouverture pilote alors l'ouverture du capot de protection mobile correspondant uniquement à l'équipement en cours d'installation. De ce fait, on obtient un gain de temps lors des reconfigurations de cabine et le risque de déverrouiller des capots de protection mobiles ne correspondant pas à la configuration choisie est supprimé.

Selon une variante, au moins un doigt du moyen d'ouverture comprend une pente inclinée, placée à une première extrémité du doigt et qui, dans une première position, est apte à coopérer avec un système de verrouillage de l'équipement de telle manière que le verrouillage du système de verrouillage sur le rail génère une translation du doigt. Un moyen élastique placé à une seconde extrémité du doigt assure le retour du doigt dans la première position.

Dans cette variante, le moyen d'ouverture est activé automatiquement, par l'intermédiaire de la translation du doigt, lors du verrouillage de l'équipement sur le rail du plancher et non lors du montage de l'équipement et pilote à ce moment-là l'ouverture du capot de protection mobile. On retrouve les mêmes avantages en termes de gain de temps.

Selon un autre mode de réalisation de l'invention, au moins un doigt du moyen d'ouverture comporte au moins un moyen de verrouillage du capot de protection mobile. Ce moyen de verrouillage peut être par exemple un ou deux crochets solidaires du doigt et deux pions solidaires du capot de protection mobile coopérant avec les crochets du doigt. La translation du doigt, obtenue lors du montage de l'équipement par exemple, assure le désengagement des pions des crochets, déverrouillant ainsi le capot de protection mobile. Le capot de protection mobile est alors entraîné en rotation autour d'un axe, qui peut être par exemple solidaire de l'embase, par au moins un élément élastique afin d'ouvrir l'embase.

Dans ce mode de réalisation, le capot de protection mobile, après avoir été déverrouillé, ouvre automatiquement l'embase, sous l'action de l'élément élastique, et permet ainsi l'accès à l'embase pour la connexion de la fiche.

Après le démontage de l'équipement, le moyen de verrouillage du capot de protection mobile est revenu en position verrouillée sous l'action de moyens élastiques placés en extrémité des doigts. Une action manuelle permet de fermer l'embase par l'intermédiaire du capot de protection mobile, qui est automatiquement verrouillé par le moyen de verrouillage.

Selon une autre alternative, le capot de protection mobile comporte au moins une came coopérant avec au moins un doigt afin que la translation du doigt entraîne la rotation du capot de protection mobile autour d'un axe. De ce fait, la translation du doigt, lors du montage de l'équipement sur le plancher, entraîne la rotation du capot de protection mobile afin d'ouvrir l'embase. Lors du démontage de l'équipement, le doigt est libéré et entraîné en translation sous l'effet d'un moyen élastique, la translation du doigt entraînant la rotation inverse du capot de protection mobile afin de fermer l'embase.

Cette alternative présente l'avantage supplémentaire de réaliser, en plus de l'ouverture automatique de l'embase lors du montage de l'équipement, la fermeture automatique de l'embase lors du démontage de l'équipement. La fermeture automatique de l'embase, au-delà du gain de temps obtenu lors de la reconfiguration de la cabine, supprime le risque d'oubli de la fermeture de l'embase et ainsi les risques évoqués précédemment en cas d'ouverture accidentelle de l'embase, tels que la dégradation des contacts ou l'électrocution de personnes. Le risque de la casse du capot de protection mobile, resté en position relevée, par le déplacement de personnes ou de charges par exemple, est également supprimé par cette fermeture automatique.

L'invention précise également que la fiche reliée à l'équipement peut comporter au moins une broche de type contact à ressort et l'embase noyée dans le plancher au moins un contact par plage électrique qui coopèrent ensemble afin d'assurer la liaison électrique entre le harnais et l'équipement.

Ainsi l'utilisation de contacts à plage électrique dans l'embase permet, grâce au faible volume de ces contacts, de réduire considérablement l'encombrement de l'embase et de pouvoir la noyer dans des planchers de faible épaisseur, tels que l'on peut en rencontrer notamment dans les aéronefs à voilure tournante.

De plus, différentes fonctions électriques ou électroniques peuvent aujourd'hui être intégrées dans les équipements et notamment dans les sièges et sont listées ci-dessous, de façon non exhaustive :
- fonctions de sécurité : puissance et signal de déclenchement pour l'airbag par exemple,
- fonctions de confort : moyens chauffants, refroidissement de combinaison active de personnel de bord par exemple,
- fonctions d'information : détection de la présence d'un passager, casque d'écoute intégré aux sièges, écran par exemple.

La multiplication de ces fonctions augmente le nombre de contacts à utiliser pour relier électriquement le siège au véhicule, ainsi que leurs caractéristiques en fonction des courants électriques pouvant circuler, les lignes de puissance pouvant par exemple alimenter les airbags et les sièges chauffants et les lignes de signal pouvant alimenter par exemple des moyens de communication (téléphones, « laptops »...) ou d'échanges de données (déclenchement des airbags, présence d'un passager sur le siège...). Les contacts à plage électrique, toujours grâce à leur faible encombrement, permettent cette multiplication de fonction tout en restant dans un volume restreint.

De plus, ce type de contacts (contacts à ressort et contacts à plage électrique), de technologie connue, permet de faire passer aussi bien des courants de puissance que des signaux.

Enfin, ce type de liaison permet d'absorber des écarts mécaniques de positionnement de la partie mobile (fiche reliée à l'équipement contenant les contacts à ressort) et de la partie fixe (embase solidaire du plancher contenant les contacts à plage électrique), tels que les dispersions de la position des rails ou le montage des équipements, ainsi que les déformations du plancher.

Le dispositif comprend éventuellement un moyen de protection de la fiche, lorsque l'équipement est fixé sur le plancher et que l'embase est reliée électriquement à la fiche de l'équipement. La protection est destinée à protéger la fiche de l'équipement contre des chocs éventuellement causés par des éléments extérieurs, notamment par les pieds de passagers du véhicule.

La présente invention a également pour objet un aéronef équipé d'un tel dispositif, le harnais cheminant sous la surface supérieure du plancher et l'embase étant noyée dans l'épaisseur du plancher afin que la surface supérieure du plancher, en regard des équipements, ne présente aucune partie saillante, notamment dans les zones où aucun équipement n'est monté. Un capot de protection mobile assure l'ouverture et la fermeture de l'embase, notamment par l'intermédiaire d'un moyen d'ouverture entraîné lors du montage de l'équipement dans le rail du plancher.

Enfin l'invention vise aussi un aéronef, équipé d'un tel dispositif, la fiche de l'équipement étant reliée au soubassement de l'équipement de telle sorte que, après verrouillage de l'équipement, dans le rail, la fiche se déplace suivant une trajectoire prédéterminée sous l'action d'un levier afin de se connecter à l'embase.

Dans ce mode de réalisation, l'équipement de l'aéronef est tout d'abord assemblé et verrouillé sur le rail du plancher, ce qui entraîne l'ouverture de l'embase. Puis l'opérateur chargé de la mise en place des équipements dans la cabine peut connecter électriquement l'équipement à l'aéronef par l'intermédiaire d'un levier. En effet, ce levier, relié à la fiche, entraîne le déplacement de la fiche par rapport au soubassement de l'équipement selon la trajectoire prédéterminée, afin d'assurer la liaison électrique entre l'embase et la fiche.

La trajectoire prédéterminée de la fiche est définie par la position du soubassement vis-à-vis du plancher, par la position de l'embase sur le plancher et par la position de la fiche vis-à-vis du soubassement, afin de garantir la liaison électrique entre l'embase et la fiche.

Les avantages de ce mode de réalisation sont, comme vu précédemment, l'ouverture automatique de l'embase lors du montage ou du verrouillage de l'équipement. De plus, la connexion de la fiche sur l'embase, obtenue par l'intermédiaire d'un levier et de la trajectoire prédéterminée, est ainsi fiabilisée. De ce fait, la mise en place et la connexion de l'équipement sont réalisées rapidement et de façon fiable.

L'exemple du siège a été parfois pris dans la description ci-dessus et il sera utilisé pour illustrer les exemples suivants, mais ce dispositif peut être étendu à tout équipement fixé dans la cabine et nécessitant une alimentation électrique en puissance et en signal.

L'invention et ses avantages apparaîtront avec plus de détails dans le cadre de la description qui suit avec des exemples de réalisation donnés à titre illustratif en référence aux figures annexées qui représentent :
- la figure 1, une vue de l'intérieur de la cabine d'un véhicule équipée de sièges,
- la figure 2, une vue en coupe de l'implantation de l'embase et du harnais dans le plancher,
- la figure 3, une vue en coupe de la connexion entre l'embase et la fiche,
- les figures 4 et 5, un premier mode de réalisation de l'invention
- la figure 6, un second mode de réalisation de l'invention,
- les figures 7 et 8, un troisième mode de réalisation de l'invention,
- la figure 9, le système de contacts à ressorts.
- les figures 10 et 11, les zones possibles d'implantation de l'embase,
- la figure 12, un carter de protection de la fiche connectée à l'embase,
- La figure 13, un moyen de connexion de la fiche sur l'embase.

Les éléments présents dans plusieurs figures distinctes sont affectés d'une seule et même référence.

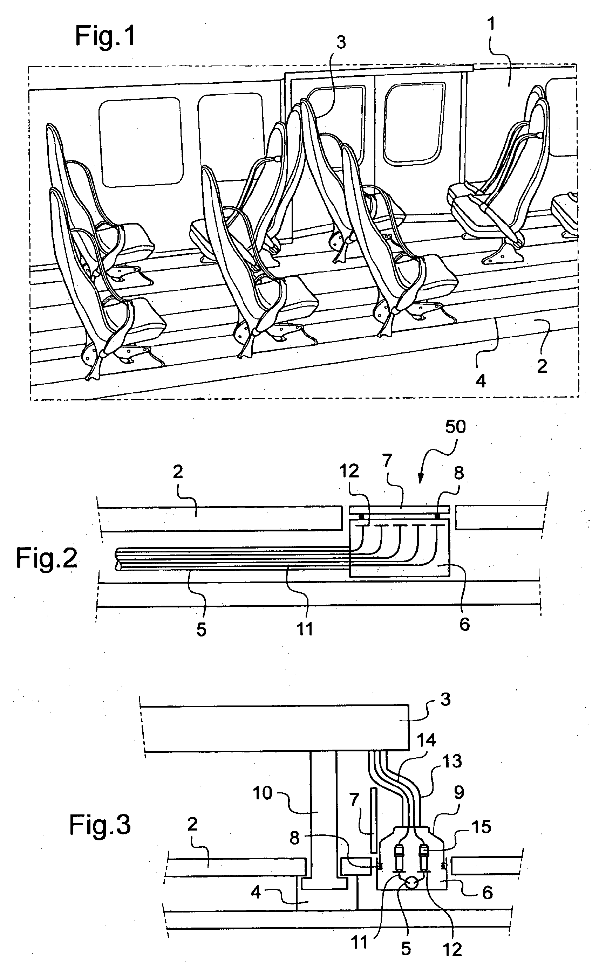

La figure 1 présente un véhicule 1 dans lequel est fixé au moins un équipement 3, tel qu'un siège ou une table, sur un plancher 2, par l'intermédiaire d'un rail de fixation 4 noyé dans le plancher. Les différentes fonctions électriques qui peuvent être intégrées au siège 3 ne sont pas représentées sur les figures.

On peut voir sur la figure 2 le dispositif d'alimentation électrique 50 comportant un harnais électrique 5 et une embase 6. Le harnais 5, comportant au moins un conducteur 11, chemine à l'intérieur du plancher 2, chaque conducteur 11 étant relié électriquement d'une part à une ou plusieurs sources de puissance électrique ou de signal (non représentées sur les figures) du véhicule 1 et d'autre part à un ou plusieurs contacts 12 fixés dans l'embase 6.

L'embase 6 est noyée dans le plancher 2 et est protégée de l'environnement extérieur par un capot de protection mobile 7. Cette protection permet d'éviter l'intrusion d'éléments étrangers dans l'embase 6 ou au niveau des contacts 12, pouvant générer des dégradations mécaniques ou des courts-circuits. Cette protection évite également les risques d'électrocution des personnes circulant ou se trouvant dans le véhicule 1. Le capot de protection mobile 7 assure, dans sa position fermée, une surface supérieure du plancher 2, en regard de l'équipement 3, sans saillie et peut être affleurant à la surface supérieure du plancher 2, permettant ainsi d'avoir un plancher 2 sans aspérité, c'est-à-dire sans zone en bosse ou en creux.

La figure 3 représente un équipement 3 fixé dans le rail 4 et l'embase 6 connectée à une fiche 9. La fiche 9 comporte le même nombre de broches 15 que l'embase 6 comporte de contacts 12 et est liée à un faisceau 13, comportant au moins un conducteur 14. Chaque conducteur 14 est relié électriquement d'une part à au moins une broche 15 et d'autre part aux appareillages électriques de l'équipement 3, non représentés sur les figures, tels que l'airbag, les moyens chauffants. Le faisceau 13 chemine le long et à l'intérieur de l'équipement 3.

On peut voir également le capot de protection mobile 7 en position relevée, c'est-à-dire que l'embase 6 est ouverte, permettant la connexion de la fiche 9 sur l'embase 6. Lorsque la fiche 9 est connectée à l'embase 6, chaque contact 12 de l'embase 6 a une liaison électrique avec une broche 15 de la fiche 9, reliant ainsi électriquement les sources de puissance et d'information du véhicule avec les fonctions électriques de l'équipement 3.

Un joint 8, visible sur les figures 2 et 3, est interposé entre l'embase 6 et le capot de protection mobile 7. Le joint 8 étant solidaire de l'embase 6, le capot de protection mobile 7 vient, dans sa position fermée, en contact contre le joint 8, assurant ainsi une étanchéité afin de protéger l'intérieur de l'embase 6, et notamment les contacts 12, de l'environnement extérieur.

En effet, l'environnement extérieur peut être agressif (sable, eau de mer, boue...), notamment pour les composants électriques, de même que les différentes charges transportées ou leur contenu. L'embase et les contacts électriques qu'elle contient sont positionnés dans le plancher et en conséquence très exposés à l'environnement extérieur.

De ce fait, le risque de dégradation de l'embase ou des contacts électriques qu'elle contient est important si l'embase n'est pas suffisamment protégée pour résister à ces éléments, c'est-à-dire si l'embase ne dispose pas d'un système d'étanchéité suffisant.

De plus, le capot de protection mobile 7 étant solidaire de l'embase 6 et mobile autour d'un axe 20, solidaire lui aussi de l'embase 6, la position du capot de protection mobile 7 par rapport au joint 8 est totalement indépendante des déformations du plancher, des différents éléments du plancher et des dispersions dans le positionnement de l'embase, notamment par rapport au plancher. Par suite l'étanchéité est assurée efficacement qu'elles que soient ces déformations et dispersions.

Afin de garantir cette étanchéité, le capot de protection mobile 7 doit être maintenu en contact du joint 8. Pour cela, il est verrouillé dans cette position par l'intermédiaire d'au moins un doigt 16, comportant au moins un moyen de verrouillage 30.

Dans le cas de la figure 3, où un équipement 3 est fixé sur le plancher 2 et les contacts 15 de la fiche 9 sont reliés aux contacts 12 de l'embase 6, cette fiche 9 vient à son tour en contact avec le joint 8 et assure l'étanchéité avec l'environnement extérieur, un système de verrouillage (non représenté) de la fiche 9 avec l'embase 6 permettant à la fiche 9 de rester en contact avec le joint 8.

Dans une variante, le joint 8 peut être solidaire du capot de protection mobile 7, un autre joint étant alors intégré à la fiche 9 afin d'assurer également l'étanchéité du dispositif lorsque que le capot de protection mobile 7 est ouvert et que la fiche 9 est connectée à l'embase 6.

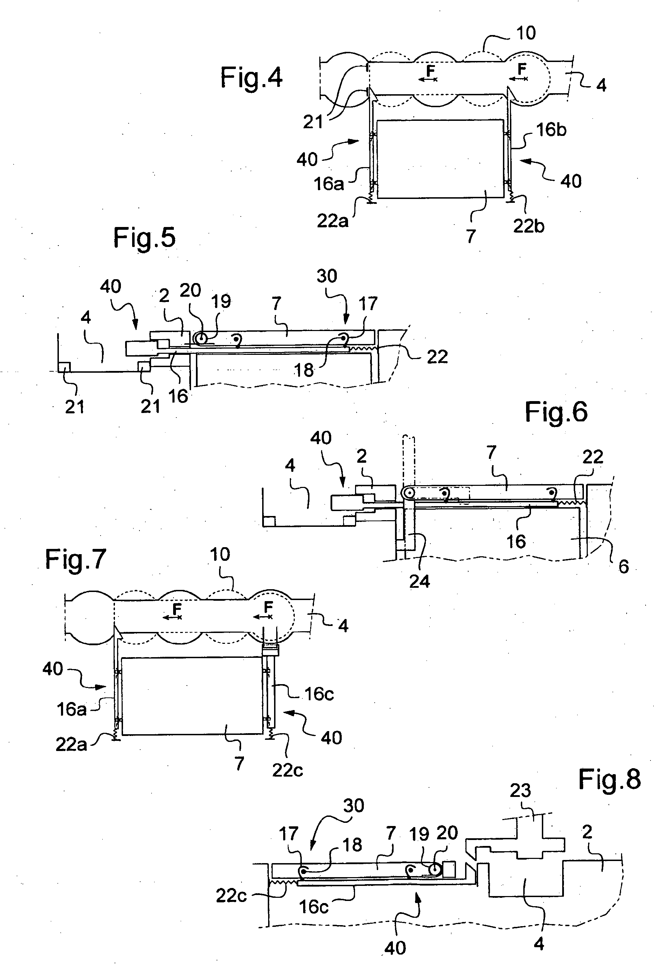

Dans un mode de réalisation préférée représenté sur les figures 4 et 5, deux moyens d'ouverture 40 comprennent deux doigts 16a et 16b, positionnés de chaque côté de l'embase 6 et pouvant se déplacer en translation perpendiculairement à la direction du rail 4, ainsi qu'un moyen de verrouillage 30 constitué de deux crochets 17 sur chaque doigt 16 et de deux pions 18 solidaires du capot de protection mobile 7. Dans une position initiale, une pente située à une première extrémité de chaque doigt 16 débouche dans le rail 4, de telle sorte que, lors du montage de l'équipement 3 dans le rail 4, le soubassement 10 de l'équipement 3 coopère avec la pente de chaque doigt 16 en se translatant suivant la flèche F jusqu'à la butée de positionnement 21 pour provoquer la translation de chaque doigt 16 en s'écartant du rail 4. Les deux crochets 17 sur chaque doigt 16 libèrent alors deux pions 18 solidaires du capot de protection mobile 7 et déverrouillent ainsi le capot de protection mobile 7. Le capot de protection mobile 7 est alors entraîné en rotation autour de l'axe 20, parallèle à la direction du rail 4, sous l'action d'au moins un ressort de torsion 19 pour assurer l'ouverture de l'embase 6. Cet axe 20 peut être intégré à l'embase 6 comme représenté sur les figures 4 et 5 ou bien être intégré au capot ou encore être une pièce indépendante. Un ressort de compression 22 est placé à la seconde extrémité de chaque doigt 16, à l'opposé du rail 4, afin d'assurer le retour en position initiale de chaque doigt 16 lorsque l'équipement 3 est éloigné des butées 21 en vue d'être retiré du rail 4. Chaque crochet 17 est alors translaté dans une position apte à assurer le verrouillage du capot de protection 7. Il faut alors agir manuellement sur le capot de protection mobile 7 pour le refermer, chaque pion 18 se plaçant alors sous chaque crochet 17 afin de verrouiller le capot de protection mobile 7 sur l'embase 6.

Cette redondance des doigts 16a et 16b permet d'éviter une ouverture accidentelle ou intempestive du capot de protection mobile 7 lors d'une action humaine ou de l'introduction d'objets dans le rail et les risques associés à cette ouverture.

Du fait de l'utilisation de deux doigts 16a et 16b, une interface spécifique est nécessaire pour commander l'ouverture du capot de protection mobile 7 en commandant simultanément la translation des deux doigts 16a et 16b, que ce soit lors d'opérations de maintenance avec l'utilisation d'un outil spécifique ou lors du montage des équipements 3 avec l'intégration de cette interface dans le soubassement 10 de l'équipement 3.

Un autre mode de réalisation est représenté aux figures 7 et 8. Il utilise deux doigts 16a et 16c et fonctionne essentiellement selon le principe décrit sur les figures 4 et 5. La seule différence se trouve dans le mode de pilotage de la translation du doigt 16c, qui a remplacé le doigt 16b des figures 4 et 5. En effet, le doigt 16c est entraîné en translation par un verrouillage de l'équipement 3 et non l'arrivée du soubassement 10 de l'équipement 3 contre la butée de positionnement 21.

On peut voir sur la figure 8 le système de verrouillage 23, intégré au soubassement 10 de l'équipement 3, qui se translate afin de bloquer l'équipement 3 dans le rail 4 et qui vient simultanément appuyer sur une pente présente à une première extrémité du doigt 16c, afin de transmette au doigt 16c un mouvement de translation perpendiculairement à la direction du rail 4.

Le retour en position du doigt 16c est assuré par l'intermédiaire d'un ressort de compression 22c placé à une seconde extrémité du doigt 16c lorsque le système de verrouillage 23 de l'équipement 3 est déverrouillé du rail 4.

Il faut finalement agir manuellement sur le capot de protection mobile 7, comme pour le mode de réalisation décrit sur les figures 4 et 5, pour le refermer sur l'embase 6.

La différence entre ce mode de réalisation et celui décrit sur les figures 4 et 5 est la synchronisation de l'ouverture de l'embase avec le verrouillage de l'équipement sur le rail et non seulement son arrivée contre la butée de positionnement 21.

Selon une variante de l'invention représentée sur la figure 6, les 2 doigts 16a et 16b, se translatant à partir d'une position initiale, selon le principe décrit sur les figures 4 et 5, lors du montage de l'équipement 3 dans le rail 4, coopèrent avec au moins une came 24, solidaire du capot de protection mobile 7. Le capot de protection mobile 7 est alors entraîné en rotation autour d'un axe 20 parallèle au rail 4 afin d'ouvrir l'embase 6. Lors du démontage de l'équipement 3, un ressort de compression 22 permet la translation de chaque doigt 16 assurant son retour dans la position initiale, entrainant, par l'intermédiaire de la came 24 du capot de protection mobile 7, le capot de protection mobile 7 en rotation dans le sens inverse, autour de l'axe 20, afin de fermer l'embase 6.

Cette alternative présente l'avantage supplémentaire de réaliser la fermeture automatique de l'embase 6 lors du démontage du siège 3, ce qui, au-delà du gain de temps obtenu lors de la reconfiguration de la cabine, supprime le risque d'oubli de la fermeture de l'embase 6 et également les risques évoqués précédemment en cas d'ouverture accidentelle de l'embase, tels que la dégradation des contacts 12 par des éléments extérieurs ou l'électrocution de personnes.

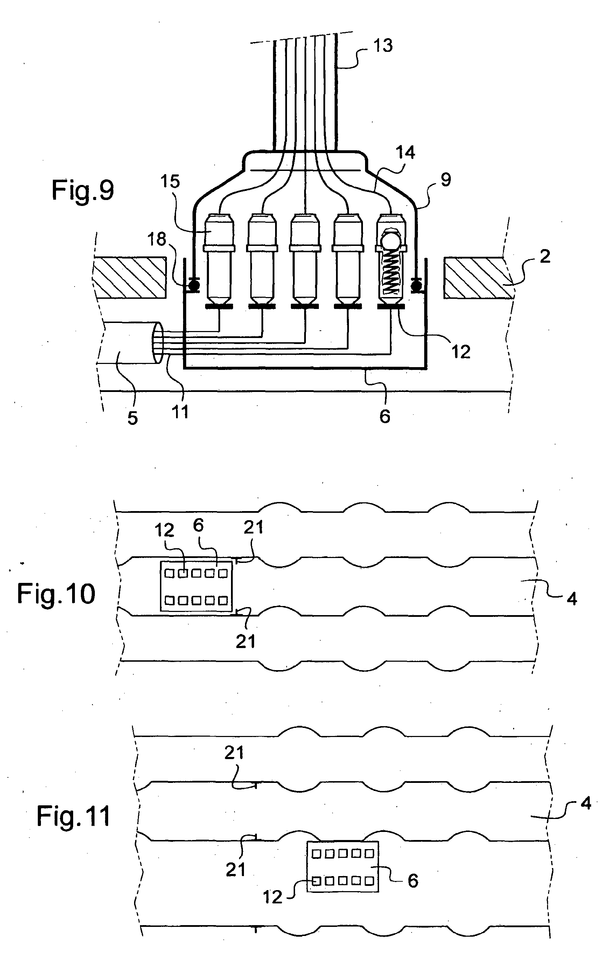

Un mode de réalisation particulier, représenté schématiquement sur la figure 9 est l'utilisation, pour les liaisons électriques entre la fiche 9 et l'embase 6, de contacts à ressort 15 implantés dans la fiche 9 qui coopèrent avec des plages électriques 12 implantées dans l'embase 6.

L'utilisation des contacts à plage électrique 12 dans l'embase 6 permet, grâce au faible volume de ces contacts, de réduire considérablement l'encombrement de l'embase 6 et de pouvoir ainsi la noyer complètement dans des planchers de faible épaisseur, tels que l'on peut en rencontrer notamment dans les aéronefs à voilure tournante, tout en permettant d'utiliser un nombre suffisant de contacts pour assurer l'ensemble des fonctions électriques, telles que :
- fonctions de sécurité : airbag (puissance et signal de déclenchement) ...
- fonctions de confort : moyens chauffants, refroidissement de combinaison active de personnel de bord ...
- fonctions d'information : détection de la présence de passagers, casque d'écoute intégré aux sièges, écran ...

De plus, les contacts à ressort 15 implantés dans la fiche 9, de technologie connue, permettent de faire passer aussi bien des courants de puissance et des signaux

Enfin, l'utilisation de ces contacts à plage électrique permet d'absorber des écarts mécaniques de positionnement de la partie mobile (fiche reliée au siège contenant les contacts à ressort) et la partie fixe (embase solidaire du plancher contenant les contacts à plage électrique), tels que les dispersions de la position des glissières ou le montage des équipements, ainsi que les déformations du plancher.

La figure 10 présente une variante de l'invention avec une implantation de l'embase 6 dans la continuité du rail de fixation 4. La figure 11 présente une autre variante avec une implantation de l'embase 6 à côté du rail de fixation 4.

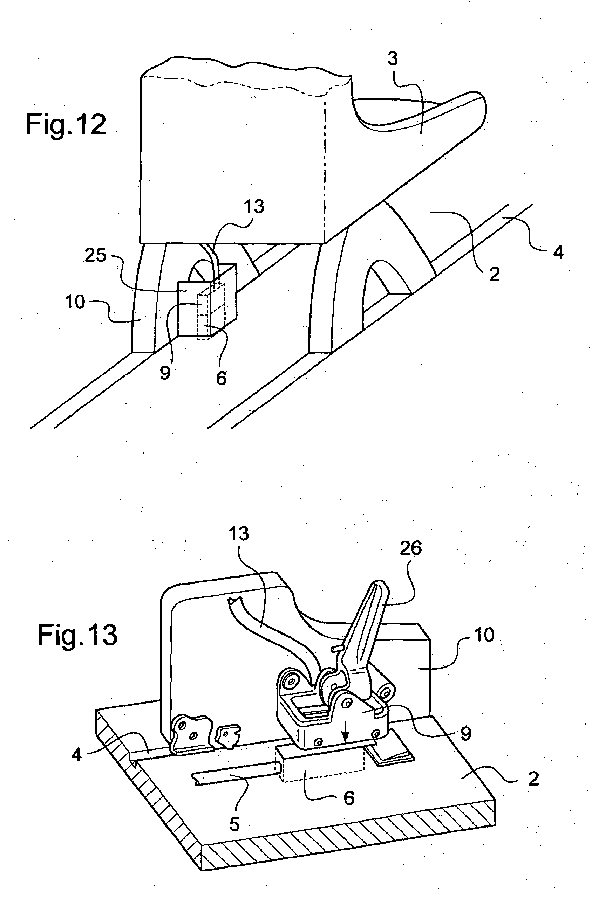

Sur la figure 12, on peut voir l'implantation d'un carter 25, qui protège la fiche 9, connectée à l'embase 6, des chocs éventuellement provoqués par des éléments extérieurs, notamment les pieds des passagers des autres sièges.

Sur la figure 13, il est représenté un exemple d'une fiche 9, qui est assemblée sur le soubassement 10 de l'équipement 3. La fiche 9 est mobile par rapport au soubassement 10 suivant une trajectoire prédéterminée, par exemple une translation suivant la verticale.

La trajectoire prédéterminée de la fiche 9 est définie par la position du soubassement 10 vis-à-vis du plancher 2, par la position de l'embase 6 sur le plancher 2 et par la position de la fiche 9 vis-à-vis du soubassement 10. La trajectoire prédéterminée permet d'amener la fiche 9 en position de coopérer avec l'embase 6, entre les contacts 12 de l'embase 6 et les broches 15 de la fiche 9.

Le déplacement de la fiche 9 le long de la trajectoire prédéterminée, est réalisé, par exemple, par l'intermédiaire d'un levier 26 relié à la fiche 9.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'alimentation électrique (50) d'un équipement (3) de véhicule (1), comprenant :
- un harnais électrique (5) contenant au moins un conducteur électrique (11),
- une embase (6), munie d'au moins un contact électrique (12) relié électriquement audit conducteur (11) dudit harnais (5), ladite embase étant apte à coopérer avec une fiche (9) dudit équipement (3),
ledit harnais (5) étant apte à cheminer sous la surface supérieure d'un plancher (2) dudit véhicule (1) en regard dudit équipement (3), ladite embase (6) étant apte à être noyée dans l'épaisseur dudit plancher (2) afin que la surface supérieure dudit plancher (2) ne présente aucune partie saillante,
**caractérisé en ce que** ledit dispositif (50) comporte un capot de protection mobile (7) assurant l'ouverture et la fermeture de ladite embase (6) et un moyen d'ouverture (40) apte à être entraîné par le montage dudit équipement (3) dans un rail (4) dudit plancher (2) pilotant l'ouverture dudit capot de protection mobile (7).

2. Dispositif selon la revendication 1,
**caractérisé en ce que** ledit capot de protection mobile (7) de ladite embase (6), dans sa position fermée, est affleurant à la surface supérieure dudit plancher (2).

3. Dispositif selon l'une quelconque des revendications 1 à 2,
**caractérisé en ce que** ledit capot de protection mobile (7) est solidaire de ladite embase (6), un joint (8) en matériau souple étant placé entre ledit capot de protection mobile (7) et ladite embase (6) afin d'assurer l'étanchéité de ladite embase (6) fermée par ledit capot de protection mobile (7).

4. Dispositif selon l'une quelconque des revendications 1 à 3,
**caractérisé en ce que** ledit moyen d'ouverture (40) comprend deux doigts (16) reliés audit capot de protection mobile (7) pour autoriser l'ouverture dudit capot de protection mobile (7).

5. Dispositif selon la revendication 4,
**caractérisé en ce que** au moins un doigt (16) comprend une pente inclinée, placée à une première extrémité dudit au moins un doigt (16) et débouchante, dans une première position, dans ledit rail (4), coopérant avec un soubassement (10) dudit équipement (3), la translation dudit soubassement (10) dudit équipement (3) dans ledit rail (4) vers une butée de position (21) générant une translation dudit au moins un doigt (16), un moyen élastique (22) placé à une seconde extrémité dudit au moins un doigt (16) assurant le retour dudit au moins un doigt (16) dans ladite première position.

6. Dispositif selon l'une quelconque des revendications 4 à 5,
**caractérisé en ce que** au moins un doigt (16) comprend une pente inclinée, placée à une première extrémité dudit au moins un doigt (16) et coopérant, dans une première position, avec un système de verrouillage (23) dudit équipement (3), le verrouillage dudit système de verrouillage (23) sur ledit rail (4) générant une translation dudit au moins un doigt (16), un moyen élastique (22) placé à une seconde extrémité dudit au moins un doigt (16) assurant le retour de dudit au moins un doigt (16) dans ladite première position.

7. Dispositif selon l'une quelconque des revendications 4 à 6, **caractérisé en ce que** ledit au moins un doigt (16) comporte au moins un moyen de verrouillage (30) dudit capot de protection mobile (7) assurant, lors de la translation dudit au moins un doigt (16), le déverrouillage dudit capot de protection mobile (7) alors entraîné en rotation autour d'un axe (20) par au moins un élément élastique (19) afin d'ouvrir ladite embase (6).

8. Dispositif selon la revendication 7,
**caractérisé en ce que** ledit moyen de verrouillage (30) comporte au moins un crochet (17) et au moins un pion (18) solidaire respectivement de ladite embase (6) ou dudit capot de protection mobile (7).

9. Dispositif selon l'une quelconque des revendications 4 à 6,
**caractérisé en ce que** ledit capot de protection mobile (7) comporte au moins une came (24) coopérant avec ledit au moins un doigt (16), la translation dudit au moins un doigt (16) entraînant la rotation dudit capot de protection mobile (7).

10. Dispositif selon l'une quelconque des revendications 1 à 9,
**caractérisé en ce que** ladite embase (6) comporte au moins un contact par plage électrique (12) apte à être reliée à une fiche (9) munie d'au moins une broche électrique (15) reliée audit équipement (3) pour assurer la liaison électrique entre ledit harnais (5) et ledit équipement (3), chaque broche électrique (15) de ladite fiche (9) comprenant un contact à ressort (15) apte à coopérer avec un contact par plage électrique (12) de ladite embase (6).

11. Dispositif selon l'une quelconque des revendications 1 à 10,
**caractérisé en ce qu'**il comporte un moyen de protection (25) pour protéger ladite fiche (9) connectée sur ladite embase (6) contre des chocs éventuellement causés par des éléments extérieurs.

12. Aéronef (1) comprenant
- au moins un équipement (3) muni d'une fiche (9), contenant au moins une broche électrique (15), ladite fiche (9) étant reliée audit au moins un équipement (3) par l'intermédiaire d'un faisceau électrique (13),
- un plancher (2) comportant au moins un rail de fixation (4) dudit au moins un équipement (3),
- un dispositif d'alimentation électrique (50) dudit au moins un équipement (3), incluant un harnais (5) muni d'au moins un conducteur électrique (11), une embase (6) munie d'au moins un contact électrique (12) relié électriquement auxdits conducteurs (11) dudit harnais (5), ladite embase (6) coopérant avec ladite fiche (9) pour assurer la liaison électrique entre ledit harnais (5) et ledit équipement (3),
**caractérisé en ce que** ledit dispositif (50) est selon l'une quelconque des revendications 1 à 11, ledit harnais (5) cheminant sous la surface supérieure dudit plancher (2) en regard dudit équipement (3), ladite embase (6) étant noyée dans l'épaisseur dudit plancher (2), la surface supérieure dudit plancher (2) ne présentant ainsi aucune partie saillante, un moyen d'ouverture (16) entraîné par le montage dudit au moins un équipement (3) dans ledit au moins un rail (4) dudit plancher (2) pilotant l'ouverture et la fermeture de ladite embase (6) par l'intermédiaire d'un capot de protection mobile (7).

13. Aéronef (1) selon la revendication 12,
**caractérisé en ce que** ledit capot de protection mobile (7) de ladite embase (6), dans sa position fermée, est affleurant à la surface supérieure dudit plancher (2).

14. Aéronef (1) selon l'une quelconque des revendications 12 à 13,
**caractérisé en ce qu'il** comporte un moyen de protection (25) destiné à protéger la fiche (9) connectée sur ladite embase (6) contre des chocs éventuellement causés par des éléments extérieurs, ledit au moins un équipement (3) étant fixé sur ledit plancher (2).

15. Aéronef (1) selon l'une quelconque des revendications 12 à 14,
**caractérisé en ce que** la dite fiche (9) dudit au moins un équipement (3) est reliée audit soubassement (10) dudit au moins un équipement (3) de telle sorte que, après verrouillage dudit au moins un équipement (3) dans ledit rail (4), ladite fiche (9) se déplace suivant une trajectoire prédéterminé, sous l'action d'un levier (26) afin de se connecter à la dite embase (6).

## Patentansprüche

1. Vorrichtung (50) zur Stromversorgung einer Ausrüstung (3) eines Fahrzeugs (1), mit:
- einem Kabelbaum (5) mit mindestens einem elektrischen Leiter (11),
- einer Steckdose (6), die mit mindestens einem elektrischen Kontakt (12) versehen ist, der elektrisch mit dem elektrischen Leiter (11) des Kabelbaums (5) verbunden ist, wobei die Steckdose mit einem Stecker (9) der Ausrüstung (3) zusammenwirken kann,
wobei der Kabelbaum (5) unter der Oberfläche eines Fußbodens (2) des Fahrzeugs (1) gegenüber der Ausrüstung (3) verlaufen kann, wobei die Steckdose (6) in der Tiefe des Fußbodens (2) versenkbar ist, damit die Oberfläche des Fußbodens (2) keinen überstehenden Bereich aufweist,
**dadurch gekennzeichnet, dass** die Vorrichtung (50) eine bewegliche Schutzkappe (7) aufweist, die die Öffnung und den Verschluss der Steckdose (6) sicherstellt, und ein Öffnungsmittel (40), das ausgelöst werden kann durch die Montage der Ausrüstung (3) in einer Schiene (4) des Fußbodens (2), die die Öffnung der beweglichen Schutzkappe (7) steuert.

2. Vorrichtung nach Anspruch 1,
**dadurch gekennzeichnet, dass** die bewegliche Schutzkappe (7) der Steckdose (6) in ihrer geschlossenen Stellung bündig mit der Oberfläche des Fußbodens (2) abschießt.

3. Vorrichtung nach einem der Ansprüche 1 bis 2,
**dadurch gekennzeichnet, dass** die bewegliche Schutzkappe (7) mit der Steckdose (6) fest verbunden ist, wobei eine Verbindung (8) aus nachgiebigem Material zwischen der beweglichen Schutzkappe (7) und der Steckdose (6) angeordnet ist, um die Dichtheit der durch die bewegliche Schutzkappe (7) verschlossenen Steckdose sicherzustellen.

4. Vorrichtung nach einem der Ansprüche 1 bis 3,
**dadurch gekennzeichnet, dass** das Öffnungsmittel (40) zwei Stifte (16) aufweist, die mit der beweglichen Schutzkappe (7) verbunden sind, um das Öffnen der beweglichen Schutzkappe (7) zuzulassen.

5. Vorrichtung nach Anspruch 4,
**dadurch gekennzeichnet, dass** mindestens ein Stift (16) eine geneigte Schräge aufweist, die an einem ersten Ende des mindestens einen Stifts (16) angeordnet ist und in einer ersten Stellung in der Schiene (4) mündet, und mit einem Sockel (10) der Ausrüstung (3) zusammenwirkt, wobei die Längsbewegung des Sockels (10) der Ausrüstung (3) in der Schiene (4) auf einen Stellungsanschlag (21) zu eine Längsbewegung des mindestens einen Stifts (16) erzeugt, wobei ein elastisches Mittel (22), welches an einem zweiten Ende des mindestens einen Stifts (16) angeordnet ist, die Rückkehr des mindestens einen Stifts (16) in die erste Stellung gewährleistet.

6. Vorrichtung nach einem der Ansprüche 4 bis 5,
**dadurch gekennzeichnet, dass** mindestens ein Stift (16) eine geneigte Schräge aufweist, die an einem ersten Ende des mindestens einen Stifts (16) angeordnet ist und in einer ersten Stellung mit einem Verriegelungssystem (23) der Ausrüstung (3) zusammenwirkt, wobei die Verriegelung des Verriegelungssystem (23) auf der Schiene (4) eine Längsbewegung des mindestens einen Stifts (16) erzeugt, wobei ein elastisches Mittel (22), das an einem zweiten Ende des mindestens einen Stifts (16) angeordnet ist, die Rückkehr des mindestens einen Stifts (16) in die erste Stellung gewährleistet.

7. Vorrichtung nach einem der Ansprüche 4 bis 6,
**dadurch gekennzeichnet, dass** der mindestens eine Stift (16) mindestens ein Mittel (30) zur Verriegelung der beweglichen Schutzkappe (7) aufweist, das während der Längsbewegung des mindestens einen Stiftes (16) die Entriegelung der beweglichen Schutzkappe (7) gewährleistet, die dann durch mindestens ein elastisches Mittel (19) um eine Achse (20) gedreht wird, um die Steckdose (6) zu öffnen.

8. Vorrichtung nach Anspruch 7,
**dadurch gekennzeichnet, dass** das Verriegelungsmittel (30) mindestens einen Haken (17) und mindestens ein Klötzchen (18) aufweist, die jeweils an der Steckdose (6) oder der beweglichen Schutzkappe (7) befestigt sind.

9. Vorrichtung nach einem der Ansprüche 4 bis 6,
**dadurch gekennzeichnet, dass** die bewegliche Schutzkappe (7) mindestens eine Noppe (24) aufweist, die mit dem mindestens einen Stift (16) zusammenwirkt, wobei die Längsbewegung des mindestens einen Stiftes (16) die Drehung der beweglichen Schutzkappe (7) auslöst.

10. Vorrichtung nach einem der Ansprüche 1 bis 9,
**dadurch gekennzeichnet, dass** die Steckdose (6) mindestens ein elektrisches Kontaktfeld (12) aufweist, das mit einem Stecker (9) verbunden werden kann, der mit mindestens einem Kontaktstift (15) versehen ist, der mit der Ausrüstung (3) verbunden ist, um die elektrische Verbindung zwischen dem Kabelbaum (5) und der Ausrüstung (3) zu gewährleisten, wobei jeder Kontaktstift (15) des Steckers (9) einen Federkontakt (15) aufweist, der mit einem elektrischen Kontaktfeld (12) der Steckdose (6) zusammenwirken kann.

11. Vorrichtung nach einem der Ansprüche 1 bis 10,
**dadurch gekennzeichnet, dass** sie ein Schutzmittel (25) aufweist zum Schützen des mit der Steckdose (6) verbundenen Steckers (9) gegen Stöße, die gegebenenfalls durch äußere Elemente hervorgerufen werden.

12. Luftfahrzeug (1) mit
- mindestens einer Ausrüstung (3), die mit einem Stecker (9) versehen ist, der mindestens einen elektrischen Kontaktstift (15) aufweist, wobei der Stecker (9) mit der mindestens einen Ausrüstung (3) über ein elektrisches Kabelbündel (13) verbunden ist,
- einem Fußboden (2) mit mindestens einer Befestigungsschiene (4) der mindestens einen Ausrüstung (3),
- einer elektrischen Versorgungsvorrichtung (50) der mindestens einen Ausrüstung (3), die einen Kabelbaum (5) aufweist, der mit mindestens einem elektrischen Leiter (11) versehen ist, einer Steckdose (6), die mit mindestens einem elektrischen Kontakt (12) versehen ist, der elektrisch mit den Leitern (11) des Kabelbaums (5) verbunden ist, wobei die Steckdose (6) mit dem Stecker (9) zusammenwirkt, um die elektrische Verbindung zwischen dem Kabelbaum (5) und der Ausrüstung (3) zu gewährleisten,
**dadurch gekennzeichnet, dass** die Vorrichtung (5) eine Vorrichtung gemäß einem der Ansprüche 1 bis 11 ist, wobei der Kabelbaum (5) unter der Oberfläche des Fußbodens (2) gegenüber der Ausrüstung (3) verläuft, wobei die Steckdose (6) in der Tiefe des Fußbodens (2) versenkt ist, wobei die Oberfläche des Fußbodens (2) keinen vorstehenden Bereich aufweist, wobei ein Öffnungsmittel (16), das durch die Montage der mindestens einen Ausrüstung (3) in der mindestens einen Schiene (4) des Fußbodens (2) ausgelöst wird, das Öffnen und das Schließen der Steckdose (6) durch eine bewegliche Schutzkappe (7) steuert.

13. Luftfahrzeug (1) nach Anspruch 12,
**dadurch gekennzeichnet, dass** die bewegliche Schutzkappe (7) der Steckdose (6) in ihrer geschlossenen Stellung bündig mit der Oberfläche des Fußbodens (2) abschießt.

14. Luftfahrzeug (1) nach einem der Ansprüche 12 bis 13,
**dadurch gekennzeichnet, dass** es ein Schutzmittel (25) aufweist, das dazu bestimmt ist, den mit der Steckdose (6) verbundenen Stecker (9) gegen eventuelle Stöße zu schützen, die durch äußere Elemente hervorgerufen werden, wobei die mindestens eine Ausrüstung (3) auf dem Fußboden (2) befestigt ist.

15. Luftfahrzeug (1) nach einem der Ansprüche 12 bis 14,
**dadurch gekennzeichnet, dass** der Stecker (9) der mindestens einen Ausrüstung (3) mit dem Sockel (10) der mindestens einen Ausrüstung (3) derart verbunden ist, dass nach Verriegelung der mindestens einen Ausrüstung (3) in der Schiene (4) der Stecker (9) sich entlang einer vorbestimmten Bahn unter der Einwirkung eines Hebels (26) bewegt, um sich mit der Steckdose (6) zu verbinden.

## Claims

1. A device for supplying electricity (50) to an item of equipment (3) of a vehicle (1), comprising:
- an electrical harness (5) containing at least one electrical conductor (11),
- a fixed connector (6), provided with at least one electrical contact (12) electrically connected to said conductor (11) of said harness (5), said fixed connector being suitable for cooperating with a plug (9) of said item of equipment (3),
said harness (5) being suitable for running beneath the upper surface of a floor (2) of said vehicle (1) facing said item of equipment (3), said fixed connector (6) being suitable for being embedded in the thickness of said floor (2) so that the upper surface of said floor (2) does not present any protruding portion,
**characterised in that** said device (50) comprises a movable protection cap (7) for opening and closing said fixed connector (6), and an opening means (40) suitable for being driven by the mounting of said item of equipment (3) in a rail (4) of said floor (2) controlling the opening of said movable protection cap (7).

2. A device according to Claim 1,
**characterised in that** said movable protection cap (7) of said fixed connector (6), in its closed position, is flush with the upper surface of said floor (2).

3. A device according to any one of Claims 1 to 2,
**characterised in that** said movable protection cap (7) is integral with said fixed connector (6), a gasket (8) of flexible material being placed between said movable protection cap (7) and said fixed connector (6) in order to seal said fixed connector (6) which is closed by said movable protection cap (7).

4. A device according to any one of Claims 1 to 3,
**characterised in that** said opening means (40) comprises two fingers (16) which are connected to said movable protection cap (7) in order to permit the opening of said movable protection cap (7).

5. A device according to Claim 4,
**characterised in that** at least one finger (16) comprises an inclined slope, placed at a first end of said at least one finger (16) and opening, in a first position, into said rail (4), cooperating with a substructure (10) of said item of equipment (3), the translation of said substructure (10) of said item of equipment (3) in said rail (4) towards a positioning abutment (21) generating a translation of said at least one finger (16), an elastic means (22) placed at a second end of said at least one finger (16) ensuring that said at least one finger (16) is returned into said first position.

6. A device according to any one of Claims 4 to 5,
**characterised in that** at least one finger (16) comprises an inclined slope, placed at a first end of said at least one finger (16) and cooperating, in a first position, with a locking system (23) for said item of equipment (3), the locking of said locking system (23) on said rail (4) generating a translation of said at least one finger (16), an elastic means (22) placed at a second end of said at least one finger (16) ensuring that said at least one finger (16) is returned into said first position.

7. A device according to any one of Claims 4 to 6,
**characterised in that** said at least one finger (16) comprises at least one locking means (30) for locking said movable protection cap (7) which, during the translation of said at least one finger (16), unlocks said movable protection cap (7) which is then driven in rotation about an axis (20) by at least one elastic element (19) in order to open said fixed connector (6).

8. A device according to Claim 7,
**characterised in that** said locking means (30) comprises at least one hook (17) and at least one peg (18) integral respectively with said fixed connector (6) or said movable protection cap (7).

9. A device according to any one of Claims 4 to 6,
**characterised in that** said movable protection cap (7) comprises at least one cam (24) which cooperates with said at least one finger (16), the translation of said at least one finger (16) driving the rotation of said movable protection cap (7).

10. A device according to any one of Claims 1 to 9,
**characterised in that** said fixed connector (6) comprises at least one electrical plate contact (12) suitable for being connected to a plug (9) provided with at least one electrical pin (15) connected to said item of equipment (3) for producing the electrical connection between said harness (5) and said item of equipment (3), each electrical pin (15) of said plug (9) comprising a spring contact (15) suitable for cooperating with an electrical plate contact (12) of said fixed connector (6).

11. A device according to any one of Claims 1 to 10,
**characterised in that** it comprises a protection means (25) for protecting said plug (9) which is connected to said fixed connector (6) against impacts possibly caused by external elements.

12. An aircraft (1) comprising
- at least one item of equipment (3) provided with a plug (9), containing at least one electrical pin (15), said plug (9) being connected to said at least one item of equipment (3) by means of an electrical bundle (13),
- a floor (2) comprising at least one fastening rail (4) of said at least one item of equipment (3),
- a device for supplying electricity (50) to said at least one item of equipment (3), including a harness (5) provided with at least one electrical conductor (11), a fixed connector (6) provided with at least one electrical contact (12) electrically connected to said conductors (11) of said harness (5), said fixed connector (6) cooperating with said plug (9) to produce the electrical connection between said harness (5) and said item of equipment (3),
**characterised in that** said device (50) is in accordance with any one of Claims 1 to 11, said harness (5) running beneath the upper surface of said floor (2) facing said item of equipment (3), said fixed connector (6) being embedded in the thickness of said floor (2), the upper surface of said floor (2) thus not presenting any protruding portion, an opening means (16) driven by the mounting of said at least one item of equipment (3) in said at least one rail (4) of said floor (2) controlling the opening and the closure of said fixed connector (6) by means of a movable protection cap (7).

13. An aircraft (1) according to Claim 12,
**characterised in that** said movable protection cap (7) of said fixed connector (6), in its closed position, is flush with the upper surface of said floor (2).

14. An aircraft (1) according to any one of Claims 12 to 13,
**characterised in that** it comprises a protection means (25) intended to protect the plug (9) which is connected to said fixed connector (6) against impacts possibly caused by external elements, said at least one item of equipment (3) being fastened to said floor (2).

15. An aircraft (1) according to any one of Claims 12 to 14,
**characterised in that** said plug (9) of said at least one item of equipment (3) is connected to said substructure (10) of said at least one item of equipment (3) such that, after locking said at least one item of equipment (3) in said rail (4), said plug (9) is displaced along a predetermined trajectory, under the action of a lever (26) in order to be connected to said fixed connector (6).
